# EUROPÄISCHE PATENTSCHRIFT

(11) **EP 2 057 884 B1**
(45) Veröffentlichungstag und Bekanntmachung des Hinweises auf die Patenterteilung: **26.01.2011**
(21) Anmeldenummer: 08162242.5
(22) Anmeldetag: 12.08.2008
(51) Int. Cl.: A01D 43/08

(54) **Überladeassistenzsystem**
Overload assistance system
Système d'assistance de surcharge

(30) Priorität: 09.11.2007 DE 102007053912
(43) Veröffentlichungstag der Anmeldung: 13.05.2009
(73) Patentinhaber: CLAAS Selbstfahrende Erntemaschinen GmbH, 33428 Harsewinkel (DE)
(72) Erfinder: Diekhans, Dr. Norbert, 33335 Gütersloh (DE); Huster, Jochen, 33330 Gütersloh (DE); Hartmann, Ralf, 49324 Melle (DE)

(56) Entgegenhaltungen:
- EP-A- 1 250 832
- EP-A- 1 454 520
- EP-A- 1 645 178

## Beschreibung

Die Erfindung betrifft ein Überladeassistenzsystem zur automatischen Steuerung der Position der Überladevorrichtung einer landwirtschaftlichen Erntemaschine zum Überladen von Erntegut auf eine Transportvorrichtung gemäß dem Oberbegriff des Patentanspruchs 1.

Selbstfahrende Erntemaschinen wie beispielsweise Feldhäcksler oder Mähdrescher weisen üblicherweise eine Überladevorrichtung auf, mit der das geerntete Erntegut auf ein Transportfahrzeug oder in einem Speicherbehälter übergeben wird. Bei einem Feldhäcksler wird beispielsweise das Erntegut während des Ernteprozesses permanent über die Überladevorrichtung an ein nebenher fahrendes Transportfahrzeug übergeben. Hierzu muss das Transportfahrzeug parallel zu oder neben dem Feldhäcksler her fahren. Der Bediener des Feldhäckslers hat dabei stets die Position des Transportfahrzeuges zum Feldhäcksler zu kontrollieren, um eine exakte und verlustfreie Erntegutübergabe zu gewährleisten. Im einfachsten Fall wird die Position der Überladevorrichtung selbst bzw. die am Ende der Überladevorrichtung angeordnete Überladeklappe manuell durch den Bediener der Erntemaschine gesteuert. Nachteilig dabei ist, dass die Steuerung der Position der Überladevorrichtung einen beträchtlichen Teil der Aufmerksamkeit des Bedieners während des Erntebetriebes in Anspruch nimmt, wobei der Überladevorgang neben dem Bediener des Feldhäckslers auch für den Bediener des Traktors eine belastende Tätigkeit, vor allem bei Einsätzen über den ganzen Tag bedeutet, die mit zunehmender Größe der Transportfahrzeuge und steigender Erntegeschwindigkeit noch ansteigt.

In der Zeitschrift Landtechnik 6/2005 wird im Bericht "Ein Assistenzsystem zum Überladen" von der TU Braunschweig vorgeschlagen, die Relativposition zwischen der Erntemaschine und dem Transportfahrzeug zu ermitteln und daraus den Zielpunkt für den Erntegutstrahl auf dem Transportfahrzeug zu berechnen, wobei im Weiteren eine Beladungssteuerung zeitgesteuert den Auftreffpunkt im Transportladeraum automatisch anpasst, um diesen gleichmäßig zu befüllen.

Die EP 1 454 520 A1 offenbart eine Vorrichtung zur Steuerung der Überladevorrichtung an einer landwirtschaftlichen Erntemaschine, die zur besseren Übergabe des Erntegutes an ein Transportfahrzeug die Verstellung der Position der Überladeinrichtung in Abhängigkeit von der Position eines ersten Aktors zu der Position eines zweiten Aktors, wobei die Stellung der Aktoren die Stellung der Überladevorrichtung bestimmt, vornimmt. Auf diese Weise wird erreicht, dass sich die Positionen der Aktoren zueinander selbsttätig anpassen, so dass der Bediener des Feldhäckslers den zweiten Aktor nicht manuell zu verstellen braucht, wenn der erste Aktor zur Anpassung einer geänderten Situation verstellt wird, da die Verstellung des zweiten Aktors selbsttätig durch die Steuerung vorgenommen wird, so dass der Bediener während des Überladevorgangs eine Entlastung erfährt. Nachteilig ist jedoch, das der Bediener weiterhin die Positionierung der Überladevorrichtung und eine Abstimmung zu dem nebenher- oder hinterherfahrenden Transportfahrzeug vornehmen muss.

Nachteilig an den vorbekannten Lösungen ist, dass die Steuerungen der Überladevorrichtung großteils an den Einsatz von kostenintensiver Sensorik auf der landwirtschaftlichen Erntemaschine bzw. der Transportvorrichtung gekoppelt ist und eine Berücksichtigung des realen Erntegutdurchsatzvolumen nicht erfolgt, so dass die Überprüfung der Befüllungszustandes des Speicherbehälters entweder vom Bediener der Erntemaschine selbst oder mittels aufwendiger Sensorik vorgenommen werden muss.

Dementsprechend ist es Aufgabe der zugrundliegenden Erfindung, die Nachteile des zitierten Standes der Technik zu vermeiden und ein Überladeassistenzsystem zum automatischen Beladen von Speicherbehältern mit einem Gutstrom, insbesondere für Erntemaschinen, vorzuschlagen, das ein nahezu automatisches, verlustfreies und möglichst vollständiges Beladen eines Speicherbehälters ermöglicht, ohne das aufwendige Sensorik zum Erfassen des Beladungszustandes des Speicherbehälters vorhanden ist und der Bediener dennoch weitestgehend von der Beladungszustandskontrolle entlastet wird.

Diese Aufgabe wird erfindungsgemäß durch die kennzeichnenden Merkmale des Patentanspruchs 1 gelöst, wobei in den weiteren Patentansprüchen Merkmale aufgeführt sind, die diese Lösung in vorteilhafter Weise weiterentwickeln.

Indem das Überladeassistenzsystem vorsieht, dass ein erster Schüttkegel manuell erstellt wird und die zur Erstellung des ersten Schüttkegels erforderlichen Bewegungsschritte und/oder Parameter der Überladevorrichtung wiederabrufbar abgespeichert werden, können die abgespeicherten Bewegungsschritte und/oder Parameter der Überladevorrichtung für den weiteren Beladungsprozess genutzt werden. Besonders vorteilhaft können die abgespeicherten manuellen Bewegungsschritte und/oder Parameter der Überladevorrichtung zum Erstellen von weiteren Schüttkegeln genutzt werden, so dass ohne Einsatz von umfangreicher Sensorik und damit kostengünstig eine nahezu automatische Übergabe des Erntegutes an die Transportvorrichtung erfolgen, so dass der Bediener der landwirtschaftlichen Erntemaschine während des Erntebetriebes von der permanenten Überwachung des Überladungsvorgangs und der Befüllungskontrolle entlastet wird.

In einfachsten Fall ist eine Steuereinrichtung vorhanden, die ein Lernprogramm zum Erlernen des Erstellens eines ersten Schüttkegels besitzt, durch das nach entsprechender Aktivierung der Ablauf nacheinander manuell hervorgerufener Bewegungsschritte, deren zeitlicher Ablauf und Parameter der Überladevorrichtung zum Erstellen eines ersten Schüttkegels erfasst und als Bewegungssteuerungsprogramm gespeichert werden, das nach Beendigung des Lernprogramms zur automatischen Steuerung der Überladevorrichtung zum Erstellen wenigstens eines weiteren Schüttkegels aktivierbar ist. Vorteilhaft kann somit das Erstellen von weiteren Schüttkegeln automatisiert werden, wobei keine umfangreichen Programmierarbeiten erforderlich sind, sondern vielmehr die Bewegungsschritte und/oder Parameter der Überladevorrichtung auch von ungeübten Bedienern nacheinander zusammengestellt und vorgegebenen werden können.

Indem das manuelle Erstellen eines ersten Schüttkegels von einer Referenzlinie aus gestartet wird und beendet ist, wenn eine Geometrie der Transportvorrichtung und/oder definierbare Befüllungsgrenzen erreicht sind, ist sichergestellt, dass das Erstellen des ersten Schüttkegels nicht zum Überladen der Transportvorrichtung führt und diese Vorgaben für das Erstellen der weiteren Schüttkegel nutzbar sind.

In vorteilhafter Weiterbildung der Erfindung wird das Erntegutdurchsatzvolumen, das während des manuellen Erstellens eines ersten Schüttkegels in den Speicherbehälter bis zum Erreichen der definierbaren Befüllungsgrenze des dazugehörigen Schüttkegelbereichs überladen worden ist, mit dem Erntegutdurchsatzvolumen verrechnet wird, das während des Erstellens der Schüttkegel in den jeweils nächsten zu beladenen Schüttkegelbereich mit überladen worden ist, ist sichergestellt, dass jeder Schüttkegelbereich mit der gleichen Volumendurchsatzmenge an Erntegut beladen und damit ein Überladen, über eine vorab definierbare Befüllgrenze hinaus in dem jeweiligen Schüttkegelbereich verhindert wird. Dieser Wert ist als Referenzwert wiederabrufbar abspeicherbar, so dass er für das Erstellen der nachfolgenden Schüttkegel verwendbar ist.

In besonders effektiver Weise erfolgt die Unterteilung des Speicherbehälters in Schüttkegel aufnehmende Schüttkegelbereiche anhand der Position der Bordwände, der Höhe der Bordwände und anhand des Leervolumens manuell und/oder automatisch mittels einer Steuer- und Auswerteeinheit. Um das automatische Erstellen von Schüttkegeln in den nachfolgenden Schüttkegelbereichen zu vereinfachen, erfolgt die Unterteilung des Speicherbehälters in Schüttkegelbereiche derart, dass deren Volumen gleich groß. Um diesen Vorgang zu vereinfachen, ist in vorteilhafter Weise vorgesehen, dass die Position der Bordwände, die Höhe der Bordwände und das Leervolumen des Speicherbehälters der Transportvorrichtung manuell in das Lernprogramm eingebbar und abspeicherbar oder mittels geeigneter Sensorik automatisch ermittelbar und im Lernprogramm hinterlegbar sind, so dass im einfachsten Fall die Steuereinrichtung die Überladevorrichtung entsprechend der Unterteilung der Transportvorrichtung in Schüttkegelbereiche steuert. Idealerweise erfolgt die Unterteilung derart, dass die Volumen der Schüttkegelbereiche gleich groß sind, so dass das automatische Beladen von weiteren Schüttkegelbereichen vereinfacht wird.

In einer weiteren vorteilhaften Weiterbildung der Erfindung verfährt beim Aktivieren des Bewegungsteuerungsprogramms die Steuereinrichtung die Überladeeinrichtung automatisch nacheinander zu den weiteren Schüttkegelbereichen, wobei die Überladeeinrichtung im jeweiligen Schüttkegelbereich eine Überladeposition einnimmt und während einer Zeitspanne dort verweilt, bis das überladene und ermittelbare Erntegutdurchsatzvolumen den im Bewegungssteuerungsprogramm abgespeicherten Referenzwert für die Größe des Erntegutdurchsatzvolumens erreicht hat, so dass das Befüllen der einzelnen Schüttkegelbereiche ohne Einsatz von aufwendiger Sensorik zur Feststellung des Befüllungszustandes erfolgen kann und der Bediener nach der Aktivierung des Bewegungsteuerungsprogramm nicht mehr den Befüllungszustand der jeweiligen Schüttkegelbereiche beobachten muss und dadurch eine enorme Entlastung erfährt.

In einer weiteren Ausgestaltung der Erfindung wird der Auftreffpunkt des Erntegutstrahls während des automatischen Erstellens der Schüttkegel entlang einer definierten und im Bewegungssteuerungsprogramm hinterlegbaren Geometrie geführt. Die Führung entlang einer definierten Geometrie, die vorteilhaft von der Speicherbehälterkontur begrenzt und beispielhaft als sich eine in Fahrtrichtung mittig oberhalb des Speicherbehälters erstreckenden Geraden gebildet ist, ermöglicht im Beladungsprozess eine sichere und verlustfreie Übergabe des Erntegutes in die Schüttkegelbereiche zur Erstellung eines Schüttkegels. In einer besonderen Ausgestaltung kann dabei der Auftreffpunkt des Erntegutstrahls und/oder der Schwenkbereich der Überladevorrichtung durch die Lage und/oder Größe der Schüttkegelbereiche bestimmt werden.

In einer vorteilhaften Weiterbildung der Erfindung erfolgen die manuellen Bewegungsschritte zum Erstellen eines ersten Schüttkegels anhand von charakteristischen Parametern der Transportvorrichtung, anhand von charakteristischen Parametern des zu überladenden Erntegutes und anhand des Erntegutdurchsatzvolumens. Insbesondere durch die Berücksichtigung des Erntegutdurchsatzvolumens, dass während des manuellen Erstellens eines ersten Schüttkegels überladen worden ist, kann für das automatische Erstellen der nachfolgenden Schüttkegel auf eine aufwendige Sensorik zur Ermittlung des Befüllungszustandes der jeweiligen Schüttkegel verzichtet werden, indem das automatische Erstellen der nachfolgenden Schüttkegel in Abhängigkeit vom ermittelten Erntegutdurchsatzvolumen erfolgt. Vorteilhafterweise definieren sich die charakteristischen Parameter der Überladeeinrichtung und des Transportfahrzeuges als kinematische und/oder geometrische Parameter, so dass unter Berücksichtung dieser Parameter, mittels bekannter mathematischer Zusammenhänge die manuellen Bewegungsschritte vorgenommen werden können.

Indem die Ermittlung des Erntegutdurchsatzvolumens unter Berücksichtigung von entegutspezifischen Parametern erfolgt, wird eine sehr genaue Bestimmung des Erntegutdurchsatzvolumens ermöglicht, wobei die Berücksichtigung der Erntegutart, der Erntegutfeuchtigkeit und die Häckselgutlänge einen besonders genauen Rückschluss auf die Volumenbildung geben.

In einer weiteren vorteilhaften Weiterbildung der Erfindung wird das Bewegungssteuerungsprogramm mit Verschwenken der Überladevorrichtung in den letzten zu befüllenden Schüttkegelbereich manuell oder automatisch deaktiviert. Vorteilhaft wird dann das Beladen des letzten Schüttkegelbereichs wieder manuell vom Bediener der landwirtschaftlichen Erntemaschine ohne Einsatz von Sensorik vorgenommen, um den Beladungsvorgang sicher beenden zu können und damit sich der Bediener auf den bevorstehenden Wechsel der Transportfahrzeuge einstellen kann. Zur besseren Information wird das Deaktivieren des Bewegungssteuerungsprogramms in der landwirtschaftlichen Erntemaschine visuell und/oder akustisch angezeigt, damit der Bediener informiert und die notwendigen weiteren Schritte veranlassen kann.

Dadurch, dass die charakteristischen Parameter, die Position der Bordwände der Transportvorrichtung, die Schnittlänge des Erntegutes und die Häckselqualität sind, stehen Parameter zur Verfügung, die einerseits eine Unterteilung des Speicherbehälters in eine geeignete Anzahl von Schüttkegel aufnehmende Schüttkegelbereiche und eine optimale manuelle Führung der Überladevorrichtung während der Beladung eines ersten Schüttkegelbereichs gewährleisten und andererseits eine Aussage über das Volumenverhalten des Erntegutes treffen lassen. Ein weiteres Optimieren des automatischen Erstellens der weiteren Schüttkegel lässt sich vorteilhaft unter Berücksichtung der Stellung der Überladevorrichtung und der ihr zugeordneten Überladeklappe in Bezug zur Transportvorrichtung erreichen.

In einer vorteilhaften Ausgestaltung der Erfindung betätigt das Bewegungssteuerungsprogramm eine akustische und/oder optische Anzeige, wenn während des automatischen Erstellens der Schüttkegel an wenigstens einer Stelle die lokale Befüllhöhe der Schüttkegel nicht mehr unter der definierten Befüllgrenze liegt, so dass sichergestellt, dass im Falle einer nicht gleichmäßigen Befüllung der Schüttkegelbereiche, beispielhaft durch starken Windeinfluss hervorgerufen, ein Überladen des Speicherbehälters verhindert wird.

Weitere vorteilhafte Ausgestaltungen sind Gegenstand weiterer Unteransprüche und werden nachfolgend anhand von Zeichnungen näher erläutert.

Es zeigen:
- Figur 1:: eine Draufsicht auf einen Feldhäcksler mit einem nebenherfahrenden Schlepper mit adaptierter Transportvorrichtung
- Figur 2:: eine schematische Seitenansicht eines Speicherbehälters eines Transportfahrzeuges mit einer Aufteilung in Schüttkegel aufnehmende Schüttkegelbereiche

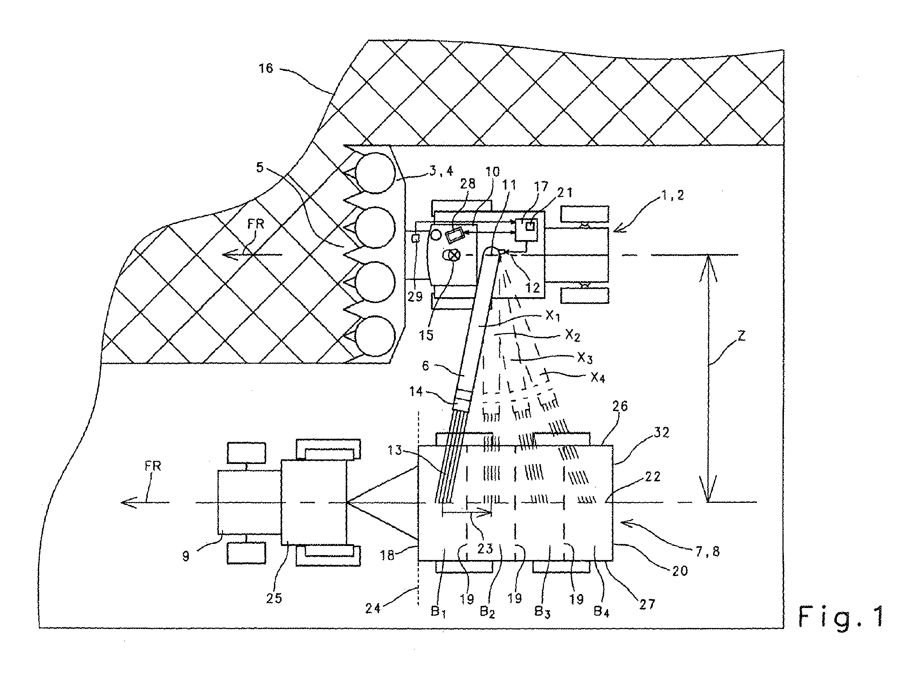

In der Figur 1 wird eine als selbstfahrender Feldhäcksler 1 ausgeführte landwirtschaftliche Erntemaschine 2 in Draufsicht dargestellt. Fronseitig ist dem Feldhäcksler 1 ein Vorsatzgerät 3, im Ausführungsbeispiel ein Maisgebiss 4 zugeordnet, welches das Erntegut 5 schneidet, aufnimmt und einer hier nicht dargestellten Häckselvorrichtung zuführt. Das zerkleinerte Erntegut 5 wird dann über eine Überladevorrichtung 6 an eine Transportvorrichtung 7 übergeben. Innerhalb der Überladevorrichtung 6 werden häufig hier nicht dargestellte Verschleißschutzbleche eingesetzt, die in der Regel verschraubt werden. Denkbar ist, diese Verschleißschutzbleche mittels Klettbänder innerhalb der Überladevorrichtung 6 zu befestigen, um so eine einfache und schnelle Demontage bzw. Montage zu bewerkstelligen.
Die Transportvorrichtung 7, die einen Speicherbehälter 8 umfasst, ist an einem als Schlepper 9 ausgeführten Transportfahrzeug adaptiert, der im Idealfall parallel neben dem Feldhäcksler 1 fährt. In an sich bekannter Weise ist die hinter der Fahrerkabine 10 angeordnete Überladevorrichtung 6 mittels einer Steuereinrichtung 17 um eine senkrechte Drehachse 11 und zur Veränderung der Höhenposition um eine horizontale Achse 12 verschwenkbar. Im Weiteren kann die Wurfweite des aus der Überladevorrichtung 6 austretenden Erntegutstrahls 13 durch eine auf- und absenkbare Überladeklappe 14 gesteuert werden. Wird die Überladeklappe 14 aufwärtig verschwenkt, wird der Erntegutstrahl 13 weiter, wird die Überladeklappe 14 abwärtig verschwenkt, wird der Erntegutstrahl 13 weniger weit geworfen.
Während der Erntefahrt stellt sich für den Bediener 15 einer landwirtschaftlichen Erntemaschine 2 das Problem, das Erntegut 5 in Fahrtrichtung FR der sich bewegenden Erntemaschine 2 gleichmäßig abzuernten, ohne dass ein Restbestand auf dem Feld 16 zurückgelassen wird und gleichzeitig eine sichere und verlustarme Überladung des abgeernteten Erntegutes 5 an den Speicherbehälter 8 der Transportvorrichtung 7 zu gewährleisten. In Bezug auf die Übergabe des Erntegutes 5 an den Speicherbehälter 8 der Transportvorrichtung 7 muss der Bediener 15 der Erntemaschine 2 den Überladebereich permanent beobachten, um den Auftreffbereich des Erntegutstrahls 13 in den Speicherbehälter 8 genau zu bestimmen. Dies führt für den Bediener 15 neben der exakten Spurführung während des Erntebetriebes zu einer weiteren enormen Belastung. Daneben besteht die Möglichkeit aufwendige Sensorik (beispielhaft der Einsatz von Kameras) einerseits an der landwirtschaftlichen Erntemaschine 2 selbst und andererseits an der Transportvorrichtung 7 anzubringen, um den Überladeprozess zu automatisieren und dadurch den Bediener 15 zu entlasten. Dies ist jedoch mit einem enormen Kostenaufwand verbunden.

Erfindungsgemäß entlastet das Übenadeassistenzsystem den Bediener 15 von der Steuerung und Überwachung des Überladevorgangs, insbesondere der Überwachung des Befüllungszustandes der Transportvorrichtung 7, indem ein erster Schüttkegel S₁ manuell erstellt wird und die zur Erstellung des ersten Schüttkegels S₁ erforderlichen Bewegungsschritte und/oder Parameter der Überladevorrichtung 6 wiederabrufbar abgespeichert werden, die zum Erstellen weiterer Schüttkegel S₂, S₃, S₄ nutzbar sind. Somit kann ohne Einsatz von umfangreicher Sensorik und damit kostengünstig ein nahezu automatisches Beladen der Transportvorrichtung 7 erfolgen.

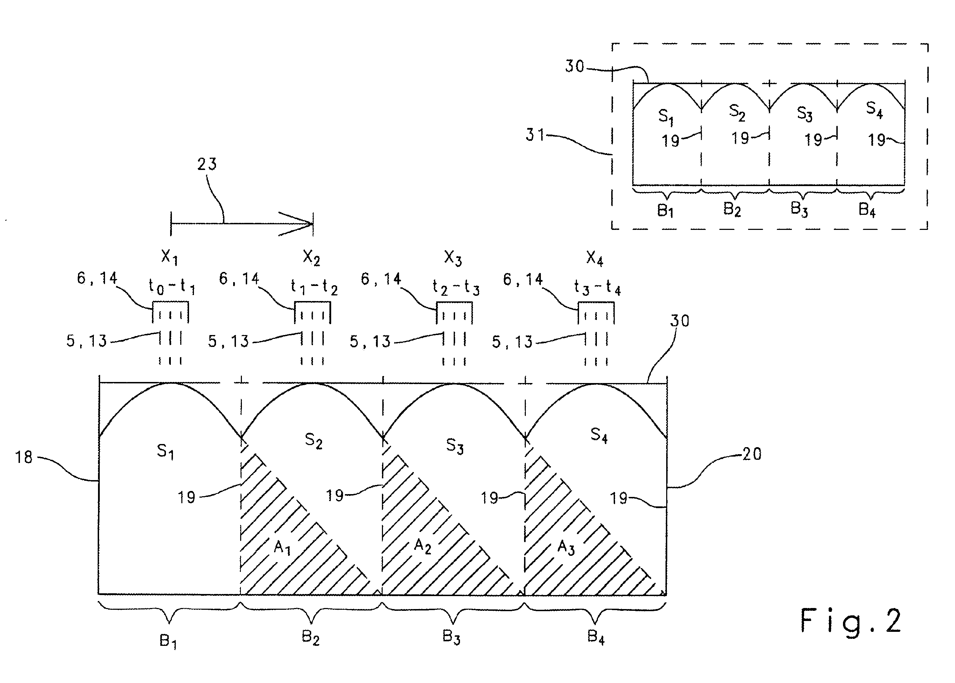

Im Ausführungsbeispiel ist der das Erntegut 5 aufnehmende Speicherbehälter 8 in vier gleichgroße Schüttkegel S₁, S₂, S₃, S₄ aufnehmende Schüttkegelbereiche B₁, B₂, B₃, B₄ unterteilt. Die Unterteilung in Schüttkegelbereiche B₁, B₂, B₃, B₄ kann vom Bediener 15 in Abhängigkeit von den durch die Höhe bzw. die Länge der Bordwände 18, 20, 26, 27 gebildeten charakteristischen Parameter des Speicherbehälters 8 manuell erfolgen. Denkbar ist auch, dass auf der landwirtschaftlichen Erntemaschine 2 und/oder auf der Transportvorrichtung 7 eine geeignete Sensorik (nicht dargestellt) angeordnet ist, damit die Möglichkeit geschaffen wird, dass die charakteristischen Parameter der Transportvorrichtung 6 automatisch ermittelbar sind und mittels einer entsprechenden Auswerte- und Steuereinheit die Unterteilung des Speicherbehälters 8 der Transportvorrichtung 7 in eine geeignete Anzahl an gleich große Schüttkegelbereiche B₁, B₂, B₃, B₄ automatisch erfolgt. Die Begrenzung der Schüttkegelbereiche B₁, B₂, B₃, B₄ erfolgt nach außen durch die vordere bzw. hinterer Bordwand 18, 19, seitlich durch Seitenwände 26, 27 und durch innenliegende virtuelle Begrenzungslinien 19 .
Um die Beladung ohne Einsatz aufwendiger Sensorik vornehmen zu können, ist erfindungsgemäß ein Steuereinrichtung 17 auf der landwirtschaftlichen Erntemaschine 2 vorgesehen, die ein Lernprogramm 21 besitzt, dass alle für das Erstellen eines ersten Schüttkegels S₁ erforderlichen Bewegungsschritte und/oder Parameter der Überladevorrichtung 6 erfasst und als Bewegungssteuerungsprogramm abspeichert, das nach Beendigung des Lernprogramms zur automatischen Steuerung der Überladevorrichtung zum erstellen der nachfolgenden Schüttkegel S₁, S₂, S₃, S₄ aktivierbar ist. Im Ausführungsbeispiel erfolgt der Lernvorgang anhand des Erstellens des an der vorderen Bordwand 18 angrenzenden Schüttkegels S₁, wobei gleichfalls das Erstellen eines der weiteren Schüttkegel S₂, S₃, S₄ als Grundlage für den Lernvorgang dienen kann. Zunächst wird während des Lernvorgangs, die Relativposition Z der landwirtschaftlichen Erntemaschine 2 zur Transportvorrichtung 7 bestimmt und im Lernprogramm hinterlegt, die idealerweise während des weiteren Beladungsprozesses konstant eingehalten wird. Dies kann manuell vom Bediener 15 oder mittels geeigneter nicht dargestellter Sensorik auch automatisch festgestellt werden. Weiter kann in an sich bekannter Weise die Relativposition Z der landwirtschaftlichen Erntemaschine 2 zu der Transportvorrichtung 7 auf einer Anzeige 28 in der Fahrerkabine 10 der landwirtschaftlichen Erntemaschine 2 oder in der Fahrerkabine 25 des Schleppers 9 angezeigt werden, so dass der für den Beladungsvorgang erforderliche konstante Abstand, insbesondere der Abstand von der Drehachse 11 der Überladevorrichtung 6 zur Transportvorrichtung 7 überwachbar ist und falls notwendig, entsprechende Korrekturen vorgenommen werden können. Mittels Einsatzes geeigneter nicht näher dargestellter Sensoren und Steuereinrichtungen zur Positionierung der landwirtschaftlichen Erntemaschine 2 und der Transportvorrichtung 7 ist zudem vorstellbar, dass die Überwachung und Vornahme von Korrekturen der Relativposition Z automatisch erfolgen.
Im Weiteren werden vom Lernprogramm die manuellen Bewegungsschritte, nämlich das Verschwenken der Überladevorrichtung 6, hier von der Referenzlinie 24 ausgehend, in eine erste Überladeposition X, die dann eingenommene Stellung der Überladevorrichtung 6 und die der Überladeklappe 14, die Zeitspanne, die die Überladevorrichtung 6 in der Überladeposition X₁ verharrt, die nötig ist, um soviel Erntegutvolumen zu überladen, dass der den ersten Schüttkegel S₁ aufnehmende Schüttkegelbereich B₁ bis zur definierbaren Befüllungsgrenze (nicht dargestellt) befüllt ist. Denkbar ist, dass andere Referenzlinien 24, beispielhaft die hintere Bordwand 20 oder die inneren Begrenzungslinien 19 nutzbar sind. Grundsätzlich kann vorgesehen sein, dass das manuelle Erstellen des ersten Schüttkegels S₁ beendet ist, wenn eine Geometrie der Transportvorrichtung und/oder definierbare Befüllungsgrenzen erreicht sind.
Um das Verschwenken der Übenadevorrichtung 6 von der Überladeposition X₁ in die nachfolgende Überladepositionen X₂, X₃, X₄ automatisieren zu können, wird zudem die jeweilige Bewegungsstrecke 23 zwischen den Überladepositionen X₁, X₂, X₃, X₄, die im Idealfall den gleichen Abstand aufweist, im Lernprogramm hinterlegt und abgespeichert und zum Erstellen von weiteren Schüttkegeln S₂, S₃, S₄ genutzt.
In vorteilhafter Weise kann das Erntegutdurchsatzvolumen, dass mittels eines auf der landwirtschaftlichen Erntemaschine 2 angeordneten Erntegutdurchsatzsensors 30 ermittelbar ist, und während des Erstellens des ersten Schüttkegels überladen worden ist, für den weiteren automatischen Beladungsvorgang Berücksichtigung finden. Um jedoch eine genaue, erntegutdurchsatzabhängige Beladung der dem Schüttkegelbereich B₁ nachfolgenden Schüttkegelbereiche B₂, B₃, B₄ gewährleisten zu können, wird, wie in Fig. 2 noch näher darzustellen ist, das überladene Erntegutdurchsatzvolumen mit dem Erntegutdurchsatzvolumen verrechnet, das beim Erstellen des jeweiligen Schüttkegels S₁, S₂, S₃, S₄ gleichzeitig in den nachfolgenden Schüttkegelbereich B₂, B₃, B₄ überladen worden ist, so dass das bereits im nachfolgenden Schüttkegelbereich B₂, B₃, B₄ vorhandene Erntegutvolumen bei der Befüllung berücksichtigt und ein überladen des Speicherbehälters 8 vermieden wird. Der ermittelte Wert ist als Referenzwert im Bewegungssteuerungsprogramm abspeicherbar und für das automatische Beladen der weiteren die Schüttkegel S₂, S₃, S₄ aufnehmenden Schüttkegelbereiche B₂, B₃, B₄ nutzbar. Durch die Kopplung des Beladungsvorgangs an das reale Erntegutdurchsatzvolumen ist ein automatisches und gleichmäßiges Beladen der Transportvorrichtung 7 ohne Einsatz aufwendiger Sensorik realisierbar.
Mittels einer nicht näher dargestellten Aktivierungsvorrichtung, die beispielhaft als Funktionstaste im in der Fahrerkabine 10 angeordneten Multifunktionsgriff (nicht dargestellt) ausgebildet sein kann, ist nach dem Erlernen des Erstellens des ersten Schüttkegels S₁ das Bewegungssteuerungsprogramms mit dem abgespeicherten Bewegungsschritten und Parametern der Überladevorrichtung, die durch die Stellung der Überladevorrichtung 6 und der Überladeklappe definiert sein können, zur Steuerung der Überladevorrichtung 6 aktivierbar. Mit Aktivieren des Bewegungsteuerungsprogramm verschwenkt die Steuereinrichtung 17 durch Ansteuerung von nicht näher dargestellten Aktoren die Überladevorrichtung 6 automatisch, entsprechend der gelernten und abgespeicherten Bewegungsstrecke 23 nacheinander zu den Überladepositionen X₂, X₃, X₄ der weiteren Schüttkegelbereiche B₂, B₃, B₄. Denkbar ist, dass der Bediener 15 vor dem Verschwenken der Überladevorrichtung 6 zur nachfolgenden Überladeposition X₂, X₃, X₄ visuell und/oder akustisch über das bevorstehende Verschwenken der Überladevorrichtung 6 informiert wird, um über den Fortschritt des Beladungsprozess informiert zu sein und im Störungsfall diesen vorzeitig beenden zu können. Die Überladevorrichtung 6 bzw. die Überladeklappe 14 nimmt in der jeweiligen Überladeposition X₂, X₃, X₄ dann die im Bewegungssteuerungsprogramm abspeicherte Stellung ein. Entsprechend des abgespeicherten Lernvorgangs verharrt die Überladevorrichtung 6 in der jeweiligen Überladeposition X₂, X₃, X₄ solange, bis das überladene Erntegutdurchsatzvolumen den im Bewegungsteuerungsprogramm hinterlegten Referenzwert erreicht hat.
Der Auftreffpunkt des Erntegutstrahls 13 auf dem jeweiligen Schüttkegelbereich B₂, B₂, B₃, B₄ erfolgt im Ausführungsbeispiel entlang einer definierten und im Bewegungssteuerungsprogramm hinterlegten von der äußeren Speicherbehälterkontur 32 begrenzten Geometrie, die sich als eine sich in Fahrtrichtung FR mittig auf dem Speicherbehälter 8 erstreckende Gerade 22 definiert.
Im Fall, dass die Steuereinrichtung 17 das Verschwenken der Überladeeinrichtung 6 in die Überladeposition X₄ im letzten zu beladenden Schüttkegelbereich B₄ bewirkt, wird das Bewegungssteuerungsprogramm manuell oder automatisch deaktiviert, wobei das automatische Deaktivieren auf einer Anzeige 28 in der Fahrerkabine 10 der landwirtschaftlichen Erntemaschine 2 visualisierbar und/oder über eine entsprechende Vorrichtung (nicht dargestellt) für den Bediener 15 darstellbar ist. Der Bediener 15 ist somit darüber informiert, dass nur noch der letzte Schüttkegelbereich B₄ zu beladen und das vollständige Beladen des Speicherbehälters 8 in Kürze abgeschlossen ist und ein Wechsel der Transportvorrichtung 8 vorgenommen werden muss. Entsprechend kann der Bediener 15 die Steuerung der Überladeeinrichtung 6, ohne Einsatz aufwendiger Sensorik bis zum vollständigen Beladen des Speicherbehälters 8 manuell übernehmen und die aufgrund des Wechsels der Transportvorrichtung 7 vorzunehmenden Schritte einleiten. Sollte der nachfolgende Speicherbehälter 8 der Transportvorrichtung 7 dem vorherigen in Größe und Volumen entsprechen, entfällt neben der Unterteilung des Speicherbehälters 8 in eine geeignete Anzahl von Schüttkegelbereiche B₁, B₂, B₃, B₄ auch der erneute Lernvorgang zum Erstellen eines ersten Schüttkegels S₁, S₂, S₃, S₄. Mittels Anordnung geeigneter Sensorik auf der landwirtschaftlichen Erntemaschine 2 oder der Transportvorrichtung 7 ist zudem denkbar, dass wie in Fig. 2 noch näher zu darzustellen ist, das Bewegungsteuerungsprogramm auch das Beladen des Schüttkegels S₄ im letzten Schüttkegelbereich B₄ automatisch vollzieht.
Denkbar ist, dass während des Lernvorgangs manuelle Bewegungsschritte und/oder Parameter der Überladevorrichtung 6 und deren zeitliche Abfolge in der Art im Lernprogramm 17 hinterlegt werden, dass die Überladevorrichtung 6 eine kürzere Zeitspanne in der jeweiligen Überladeposition X₁, X₂, X₃, X₄ verharrt, beispielhaft die Hälfte der Zeitspanne, die nötig wäre, um soviel Erntegutvolumen in den jeweiligen Schüttkegelbereich B₁, B₂, B₃, B₄ überzuladen, um das vorab definierte Volumen der Schüttkegelbereiche B₁, B₂, B₃, B₄ zu erreichen, so dass während des ersten kompletten Beladungsvorgangs jeweils nur die Hälfte des Erntegutdurchsatzvolumens überladen wird und dieser Prozess wiederholt wird. Dies kann manuell oder automatisch dadurch erfolgen, dass die Überladevorrichtung 6 zurück zur Referenzlinie 24 verschwenkt wird und das Bewegungssteuerungsprogramm nochmals, unter Berücksichtigung, dass nun auch der Schüttkegelbereich B₁ automatisch zu beladen ist, aktiviert wird. Zudem ist denkbar, dass der zweite Beladungsprozess von der hinteren Bordwand 20 aus startet. Durch das Wiederholen des Beladungsprozesses kann vorteilhaft das während des ersten Beladungsvorgangs überladene Erntegut 5 durch während der Fahrt auf das Erntegut 5 einwirkende Schüttelbewegungen zusätzlich verdichtet werden, so dass im nachfolgenden Beladungsprozess eine größeres Erntegutvolumen überladbar ist.

Weiter ist vorgesehen, dass das Erreichen einer definierbaren Befüllgrenze der Schüttkegelbereiche B₁, B₂, B₃, B₄ des Speicherbehälters 8 mittels wenigstens eines nicht dargestellten Sensors automatisch detektiert werden. So kann im Falle des Ausfalls des Erntegutdurchsatzsensors 30 ein Überladen von Erntegut 5 über das vorab definierte Erntegutdurchsatzvolumen hinaus verhindert werden. Im einfachsten Fall kann das Sensieren der Befüllungsgrenze 29 mittels eines im Speicherbehälter 8 angeordneten Füllstandssensors (nicht dargestellt) erfolgen. Mittels des Einsatzes der Füllstandsensoren lässt sich zudem die Größe des Erntegutdurchsatzvolumens treffen, das beim Beladungsvorgang eines Schüttkegelbereichs B₁, B₂, B₃, B₄ in den jeweils nächsten Schüttkegelbereich B₂, B₃, B₄ gelangt. Denkbar wäre, dass dieser Sensor an der hinteren Bordwand 20 innerhalb des Speicherbehälters 8 angeordnet ist. Vorteilhaft kann dadurch auch das Voranschreiten des Befüllungsprozesses insgesamt sensiert werden.
In einer weiteren Ausgestaltung ist vorgesehen, dass das Bewegungssteuerungsprogramm eine akustische oder optische Anzeige 28 betätigt, wenn der jeweilige Schüttkegelbereich B₁, B₂, B₃, B₄ bereits ein so großes Erntegutvolumen autweist, dass an wenigstens einer Stelle im jeweiligen Schüttkegelbereich B₁, B₂, B₃,B₄ die lokale Befüllhöhe nicht mehr unter der vorab definierten Befüllgrenze liegt, so dass sichergestellt ist, dass im Falle einer nicht gleichmäßigen Befüllung der Schüttkegelbereiche B₁, B₂, B₃, B₄, beispielhaft durch starken Windeinfluss hervorgerufen, ein Überladen des Erntegutes 5 außerhalb des Speicherbehälters 8 verhindert wird.

Bildausschnitt 31 in Fig. 2 zeigt zunächst den Speicherbehälter 8 der Transportvorrichtung 7 in einer schematischen Seitenansicht. Der Speicherbehälter 8 weist im Ausführungsbeispiel vier, gleich große Schüttkegel S₁, S₂, S₃, S₄ aufnehmende Schüttkegelbereiche B₁, B₂, B₃, B₄ auf. Eine Aufteilung in unterschiedlich große Schüttkegelbereiche B₁, B₂, B₃, B₄ wäre denkbar. Die äußeren Schüttkegelbereiche B₁, B₄ sind durch die vordere bzw. hintere Bordwand 18, 20, sowie die in Fig. 1 dargestellten Seitenwände 26, 27 und die inneren Begrenzungslinien 19 festgelegt. Die Begrenzung der inneren Schüttkegelbereiche S₂, S₃ wird jeweils durch die in Fig. 1 dargestellten Seitenwände 26, 27 und durch die inneren Begrenzungslinien 19 bestimmt. Nach oben erfolgt die Begrenzung durch die definierbare Befüllungsgrenze 29.

Wie bereits in Fig. 1 dargestellt, erfolgt das Erstellen des ersten Schüttkegels S₁ manuell, wobei die dazu erforderlichen Bewegungsschritte und/oder Parameter der Überladevorrichtung 6 bzw. Überladeklappe 14 wiederabrufbar in einem Bewegungssteuerungsprogramm abgespeichert werden. Während des in Fig. 1 näher dargestellten Lernvorgangs verharrt die Überladevorrichtung 6 in der Überladeposition X₁ in der Zeitspanne to bis t₁, wobei das Erntegut 5 über die Überladeklappe 14 in den Schüttkegelbereich B₁, zum Erstellen des ersten Schüttkegels S₁, überladen wird, so dass die Menge an Erntegutvolumen in den Schüttkegelbereich B₁ überladen wird, bis der Schüttkegel S₁ im Schüttkegelbereich B₁ das vorab definierte Volumen erreicht hat. Das während dieser Zeitspanne t₀ - t₁ über die Überladevorrichtung 6 überladene Erntegutvolumen ist mittels des in Fig.1 dargestellten Erntegutdurchsatzsensors 29 ermittelbar. Um jedoch eine genaue, erntegutdurchsatzabhängige Erstellung der weiteren Schüttkegel S₂, S₃, S₄ in den nachfolgenden Schüttkegelbereichen B₂, B₃, B₄ gewährleisten zu können, ist das während des manuellen Erstellens des ersten Schüttkegels S₁ über die Überladevorrichtung 6 überladene Erntegutdurchsatzvolumen mit dem in den noch nachfolgend zu beladenen Schüttkegelbereich B₂ bereits überladene und als Abfall A₁ bezeichnete Erntegutdurchsatzvolumen zu verrechnen. Dabei ist der Abfalls A₁, der bereits in den Schüttkegelbereich B₂ überladen worden ist, mittels nicht näher dargestellter Sensoren, im einfachsten Fall mittels wenigstens eines im Speicherbehälter 8 angeordneten Füllstandssensors, ermittelbar. Der verrechnete Wert ist als Referenzwert im Bewegungssteuerungsprogramm abspeicherbar und für das automatische Erstellen der weiteren Schüttkegel S₂, S₃, S₄ in den Schüttkegelbereichen B₂, B₃, B₄ nutzbar. Unter gleichen Erntebedingungen ist der jeweils beim Erstellen der Schüttkegel S₂, S₃ in den nachfolgenden Schüttkegelbereich B₃, B₄ überladene Abfall A₂, A₃ als konstanter Wert zu berücksichtigen, so dass der im Bewegungssteuerungsprogramm hinterlegte Referenzwert nur dann manuell oder automatisch anzupassen ist, wenn der jeweils in den nachfolgenden Schüttkegelbereich B₃, B₄ überladene Abfall A₂, A₃ sich aufgrund ändernder Erntebedingungen verändert.

Mit Aktivierung des Bewegungssteuerungsprogramms bewirkt das Bewegungssteuerungsprogramm durch Ansteuerung der in Fig. 1 dargestellten Steuereinrichtung 17 und durch Abrufen der im Bewegungssteuerungsprogramm hinterlegten Bewegungsschritte das Verschwenken der Überladevorrichtung 6 zu den nachfolgenden Überladepositionen X₂, X₃, X₄. Dort verharrt die Überladevorrichtung 6 während der Zeitspanne t₁-t₂, t₂-t₃ bis das überladene Erntegutdurchsatzvolumen den im Bewegungssteuerungsprogramm hinterlegten Referenzwert erreicht hat, wobei gleichzeitig wieder als Abfall A₂, A₃ bezeichnetes Erntegutdurchsatzvolumen in den jeweils nachfolgenden Schüttkegelbereich S₃, S₄ überladen wird.
Mit Einnahme der Überladeposition X₄ erfolgt die Deaktivierung des Bewegungssteuerungsprogramms. Dies kann manuell vom Bediener oder automatisch vom Bewegungssteuerungsprogramm selbst vorgenommen werden. Die Deaktivierung des Bewegungssteuerungsprogramms, die in der Fahrerkabine 10 der landwirtschaftlichen Erntemaschine 2 visuell und/oder akustisch darstellbar ist, erfolgt, um den Bediener 15 der landwirtschaftlichen Erntemaschine 2 davon in Kenntnis zu setzen, dass das vollständige Beladen des Speicherbehälters 8 in Kürze abgeschlossen und ein Wechsel der Transportvorrichtung 7 vorzunehmen ist. Das Beladen des letzten Schüttkegelbereichs B₄ und damit die Steuerung der Überladevorrichtung 6 erfolgt somit gleichfalls ohne Einsatz aufwendiger Sensorik manuell, so dass ein sicherer Abschluss des Beladungsvorgangs des Speicherbehälters 8 ermöglicht wird. Denkbar ist, dass das Beladen des letzten Schüttkegelbereichs B₄, während die Überladevorrichtung 6 in der Zeitspanne t₃-t₄ die Überladeposition X₄ einnimmt, mittels des Bewegungssteuerungsprogramms automatisch derart erfolgt, dass mit Verschwenken der Überladevorrichtung 6 in die Überladeposition X₄ der bereits im Schüttkegelbereich B₄ vorhandene Abfall A₃ mit dem vorab definierten Volumen des Schüttkegelbereichs B₄ verrechnet und dieser Wert abgespeichert wird und nur ein diesem Wert entsprechendes Erntegutdurchsatzvolumen in den Schüttkegelbereich B₄ überladen wird, so dass auch das Erstellen des letzten Schüttkegels S₄ automatisch und für den Bediener 15 entlastend erfolgt.

In vorteilhafter Weise wird der gesamte Beladungsprozess zum Beladen des Speicherbehälters 8 über eine Anzeige 28 bzw. Display in der landwirtschaftlichen Erntemaschine 2 visualisiert, damit der Bediener 15 permanent über den Beladungszustand der einzelnen die Schüttkegel S₁, S₂, S₃, S₄ Schüttkegelbereiche B₁, B₂, B₃, B₄ informiert ist und im Fall von Störungen, die erforderlichen Schritte einleiten kann.

Es liegt im Rahmen des Könnens eines Fachmanns das beschriebene Ausführungsbeispiel in nicht dargestellter Weise abzuwandeln oder in anderen Maschinen einzusetzen, um die beschriebenen Effekte zu erzielen, ohne dabei den Rahmen der Erfindung zu verlassen.

### Bezugszeichenliste:

- 1: Selbstfahrender Feldhäcksler
- 2: Landwirtschaftliche Erntemaschine
- 3: Vorsatzgerät
- 4: Maisgebiss
- 5: Erntegut
- 6: Überladevorrichtung
- 7: Transportvorrichtung
- 8: Speicherbehälter
- 9: Schlepper
- 10: Fahrerkabine
- 11: Senkrechte Drehachse
- 12: Horizontale Drehachse
- 13: Erntegutstrahl
- 14: Überladeklappe
- 15: Bediener
- 16: Feld
- 17: Steuereinrichtung
- 18: Vordere Bordwand
- 19: Äußere Begrenzungslinie
- 20: Hintere Bordwand
- 21: Lernprogramm
- 22: Gerade
- 23: Bewegungstrecke
- 24: Referenzlinie
- 25: Fahrerkabine
- 26: Seitenwand
- 27: Seitenwand
- 28: Anzeige
- 29: Befüllungsgrenze
- 30: Erntegutdurchsatzsensor
- 31: Bildausschnitt
- 32: Speicherbehälterkontur
- FR: Fahrtrichtung
- S₁-S₄: Schüttkegel
- B₁-B₄: Schüttkegelbereiche
- A₁- A₃: Abfall

## Patentansprüche

1. Überladeassistenzsystem zur automatischen Steuerung der Position der Überladevorrichtung einer landwirtschaftlichen Erntemaschine zum Überladen von Erntegut auf eine Transportvorrichtung,
**dadurch gekennzeichnet, dass**
ein erster Schüttkegel (S₁, S₂, S₃, S₄) manuell erstellt wird und die zur Erstellung des ersten Schüttkegels (S₁, S₂, S₃, S₄) erforderlichen Bewegungsschritte und/oder Parameter der Überladevorrichtung (6) wiederabrufbar abgespeichert werden.

2. Überladeassistenzsystem nach Anspruch 1,
**dadurch gekennzeichnet, dass**
das die abgespeicherten manuellen Bewegungsschritte und/oder Parameter der Überladeeinrichtung (6) zum Erstellen von weiteren Schüttekegeln (S₂, S₃, S₄) genutzt werden.

3. Überladeassistenzsystem nach Anspruch 1 oder 2,
**dadurch gekennzeichnet, dass**
eine Steuereinrichtung (17) ein Lernprogramm (21) zur Erlernung des Erstellens eines ersten Schüttkegels (S₁, S₂, S₃, S₄) besitzt, durch das nach entsprechender Aktivierung der Ablauf nacheinander manuell hervorgerufener Bewegungsschritte, deren zeitlicher Ablauf und Parameter der Überladevorrichtung (6) zum Erstellen eines ersten Schüttkegels (S₁, S₂, S₃, S₄) erfasst und als Bewegungssteuerprogramm gespeichert werden, das nach Beendigung des Lernprogramms (21) zur automatischen Steuerung der Überladevorrichtung (6) zum Erstellen wenigstens eines weiteren Schüttkegels (S₁, S₂, S₃, S₄) aktivierbar ist.

4. Überladeassistenzsystem nach wenigstens einem der vorhergehenden Ansprüche,
**dadurch gekennzeichnet, dass**
dass manuelle Erstellen eines ersten Schüttkegels (S1, S2, S3, S4) von einer Referenzlinie (24) aus gestartet wird und beendet ist, wenn eine Geometrie der Transportvorrichtung (7) und/oder definierbare Befüllungsgrenzen erreicht sind.

5. Überladeassistenzsystem nach wenigstens einem der vorhergehenden Ansprüche,
**dadurch gekennzeichnet, dass**
das Erntegutdurchsatzvolumen, das während des manuellen Erstellens eines ersten Schüttkegels (S₁, S₂, S₃, S₄) in den Speicherbehälter (8) bis zum Erreichen der definierbaren Befüllungsgrenze (29) des dazugehörigen Schüttkegelbereichs (B₁) überladen worden ist, mit dem Erntegutdurchsatzvolumen verrechnet wird, das während der Beladung der einzelnen Schüttkegelbereiche (B₁, B₂, B₃, B₄) in den jeweils nächsten zu beladenen Schüttkegelbereich (B₁, B₃, B₄) mit überladen worden ist und wobei dieser Wert als Referenzwert abspeicherbar ist.

6. Überladeassistenzsystem nach wenigstens einem der vorhergehenden Ansprüche,
**dadurch gekennzeichnet, dass**
eine Unterteilung des Speicherbehälters (8) der Transportvorrichtung (7) in Schüttkegel (S₁, S₂, S₃, S₄) aufnehmende Schüttkegelbereiche (B₁, B₂, B₃, B₄) anhand der Position der Bordwände (18, 19, 26, 27), der Höhe der Bordwände (18, 19, 26, 27) und anhand des Leervolumens manuell oder mittels einer Steuer- und Auswerteeinheit automatisch erfolgt.

7. Überladeassistenzsystem nach wenigstens einem der vorhergehenden Ansprüche,
**dadurch gekennzeichnet, dass**
die Steuereinrichtung die Überladevorrichtung (6) entsprechend der Unterteilung der Transportvorrichtung (7) in Schüttkegelbereiche (B₁, B₂, B₃, B₄) steuert.

8. Überladeassistenzsystem nach wenigstens einem der vorhergehenden Ansprüche,
**dadurch gekennzeichnet, dass**
das Volumen der Schüttkegelbereiche (B₁, B₂, B₃, B₄) gleich groß ist.

9. Überladeassistenzsystem nach wenigstens einem der vorhergehenden Ansprüche,
**dadurch gekennzeichnet, dass**
mit dem Aktivieren des Bewegungsteuerungsprogramms die Steuereinrichtung (17) zur Steuerung der Überladevorrichtung (6), die Überladevorrichtung (6) automatisch vom ersten an der vorderen oder hinteren Bordwand (18, 20) des Speicherbehälters (8) angrenzenden Schüttkegelbereich (S₁, S₃) zu weiteren Schüttkegelbereichen (S₁, S₂, S₃) verfährt, wobei die Überladeeinrichtung (6) im jeweiligen Schüttkegelbereich (S₁, S₂, S₃) eine Überladeposition (X₁, X₂, X₃) zum Überladen von Erntegut einnimmt und während einer Zeitspanne (t₀-t₁, t₁-t₂, t₂-t₃) dort verweilt, bis das überladene Erntegutdurchsatzvolumen den im Bewegungssteuerungsprogramm vorab definierten und abgespeicherten Referenzwert für das Erntegutdurchsatzvolumen erreicht hat.

10. Überladeassistenzsystem nach wenigstens einem der vorhergehenden Ansprüche,
**dadurch gekennzeichnet, dass**
die Auftreffpunkte des Erntegutstrahls (13) auf die Schüttkegelbereiche (B₁, B₂, B₃, B₄) entlang einer definierten und im Bewegungssteuerungsprogramm hinterlegbaren Geometrie geführt werden.

11. Überladeassistenzsystem nach Anspruch 10,
**dadurch gekennzeichnet, dass**
die Geometrie durch die äußere Speicherbehälterkontur (32) begrenzt wird.

12. Überladeassistenzsystem nach Anspruch 10 oder 11,
**dadurch gekennzeichnet, dass**
die Auftreffpunkte des Erntegutstrahls (13) auf die Schüttkegelbereiche (B₁, B₂, B₃, B₄) auf einer Geraden (22) liegen.

13. Überladeassistenzsystem nach wenigstens einem der vorhergehenden Ansprüche,
**dadurch gekennzeichnet, dass**
der Schwenkbereich der Überladevorrichtung (6) und/oder die Auftreffpunkte des Erntegutstrahls (13) auf die Schüttkegelbereiche (B₁, B₂, B₃, B₄) durch die Lage und/oder die Größe der Schüttkegelbereiche (B₂, B₃, B₄) bestimmt wird.

14. Überladeassistenzsystem nach wenigstens einem der vorhergehenden Ansprüche,
**dadurch gekennzeichnet, dass**
die manuellen Bewegungsschritte zum Erstellen eines ersten Schüttkegels (S₁, S₂, S₃, S₄) unter Berücksichtigung von charakteristischen Parametern der Transportvorrichtung (7) und anhand von charakteristischen Parametern des zu überladenden Erntegutes (5) und dem Erntegutdurchsatzvolumen erfolgen.

15. Überladeassistenzsystem nach wenigstens einem der vorhergehenden Ansprüche,
**dadurch gekennzeichnet, dass**
die charakteristischen Parameter, die Position der Bordwände (18, 20, 26, 27) der Transportvorrichtung (7), die Schnittlänge und die Häckselqualität des Erntegutes (5) sein können.

16. Überladeassistenzsystem nach wenigstens einem der vorhergehenden Ansprüche,
**dadurch gekennzeichnet, dass**
die Position der Bordwände (18, 20), die Höhe der Bordwände (18, 20) und das Leervolumen des Speicherbehälters (8) der Transportvorrichtung (7) manuell in das Lernprogramm (21) eingebbar und abspeicherbar oder mittels geeigneter Sensorik automatisch ermittelbar und im Lernprogramm (21) hinterlegbar sind.

17. Überladeassistenzsystem nach wenigstens einem der vorhergehenden Ansprüche,
**dadurch gekennzeichnet, dass**
die Parameter der Überladevorrichtung (6) die Stellung der Überladevorrichtung und (6) die der Überladeklappe (14) sein können.

18. Überladeassistenzsystem nach wenigstens einem der vorhergehenden Ansprüche,
**dadurch gekennzeichnet, dass**
die Ermittlung des Erntegutdurchsatzvolumens unter Berücksichtigung von erntegutspezifischen Parametern erfolgt.

19. Überladeassistenzsystem nach Anspruch 18,
**dadurch gekennzeichnet, dass**
die erntegutspezifischen Parameter die Erntegutart, die Erntegutfeuchügkeit und die Schnittlänge sind.

20. Überladeassistenzsystem nach wenigstens einem der vorhergehenden Ansprüche,
**dadurch gekennzeichnet, dass**
das mit dem Verschwenken der Überladevorrichtung (6) zum letzten zu befüllenden Schüttkegelbereich (B₁, B₂, B₃, B₄) das Bewegungssteuerungsprogramm manuell oder automatisch deaktiviert wird.

21. Überladeassistenzsystem nach wenigstens einem der vorhergehenden Ansprüche,
**dadurch gekennzeichnet, dass**
das Bewegungssteuerungsprogramm eine akustische oder optische Anzeige (28) betätigt, wenn während des automatischen Erstellens der Schüttkegel (S1, S2, S3, S4) an wenigstens einer Stelle die lokale Befüllhöhe der Schüttkegel (S₁, S₂, S₃, S₄) nicht mehr unter einer definierbaren Befüllgrenze (29) liegt.

## Claims

1. A transloading assistance system for automatically controlling the position of the transloading apparatus of an agricultural harvesting machine for transloading crop material on to a transport apparatus,
**characterised in that**
a first deposit cone (S₁, S₂, S₃, S₄) is produced manually and the movement steps and/or parameters of the transloading apparatus (6), that are required to produce the first deposit cone (S₁, S₂, S₃, S₄) are recallably stored.

2. A transloading assistance system according to claim 1 **characterised in that** the stored manual movement steps and/or parameters of the transloading apparatus (6) are used to produce further deposit cones (S₂, S₃, S₄).

3. A transloading assistance system according to claim 1 or claim 2 **characterised in that** a control device (17) has a learning program (21) for learning production of a first deposit cone (S₁, S₂, S₃, S₄), by which after suitable activation the sequence of movement steps which are successively manually called up, their time succession and parameters of the transloading apparatus (1) for producing a first deposit cone (S₁, S₂, S₃, S₄) are detected and stored as a movement control program which after termination of the learning program (21) can be activated for automatically controlling the transloading apparatus (6) for producing at least one further deposit cone (S₁, S₂, S₃, S₄).

4. A transloading assistance system according to at least one of the preceding claims **characterised in that** manual production of a first deposit cone (S₁, S₂, S₃, S₄) is started from a reference line (24) and concluded when a geometry of the transport apparatus (7) and/or definable filling limits are reached.

5. A transloading assistance system according to at least one of the preceding claims **characterised in that** the crop material throughput volume which during manual production of a first deposit cone (S₁, S₂, S₃, S₄) has been transloaded into the storage container (8) until the definable filling limit (29) of the associated deposit cone region (B₁) is reached is calculated with the crop material throughput volume which during loading of the individual deposit cone regions (B₁, B₂, B₃, B₄) has also been transloaded into the respectively next deposit cone region (B₁, B₂, B₃, B₄) to be loaded and wherein said value can be stored as a reference value.

6. A transloading assistance system according to at least one of the preceding claims **characterised in that** subdivision of the storage container (8) of the transport apparatus (7) into deposit cone regions (B₁, B₂, B₃, B₄) receiving deposit cones (S₁, S₂, S₃, S₄) is effected on the basis of the position of the edge walls (18, 19, 26, 27), the height of the edge walls (18, 19, 26, 27) and on the basis of the empty volume manually or by means of a control and evaluation unit.

7. A transloading assistance system according to at least one of the preceding claims **characterised in that** the control device controls the transloading apparatus (6) in accordance with the subdivision of the transport apparatus (7) into deposit cone regions (B₁, B₂, B₃, B₄).

8. A transloading assistance system according to at least one of the preceding claims **characterised in that** the volume of the deposit cone regions (B₁, B₂, B₃, B₄) is of equal magnitude.

9. A transloading assistance system according to at least one of the preceding claims **characterised in that** with activation of the movement control program the control device (17) for controlling the transloading apparatus (6) automatically moves the transloading apparatus (6) from the first deposit cone region (S₁, S₃) adjoining the front or rear edge wall (18, 20) of the storage container (8) to further deposit cone regions (S₁, S₂, S₃), wherein the transloading apparatus (6) in the respective deposit cone region (S₁, S₂, S₃) assumes a transloading position (X₁, X₂, X₃) for transloading crop material and remains there for a period of time (t₀-t₁, t₁-t₂, t₂-t₃) until the transloaded crop material throughput volume has reached the reference value for the crop material throughput volume, that was previously defined in the movement control program and stored.

10. A transloading assistance system according to at least one of the preceding claims **characterised in that** the impingement points of the crop material jet (13) on the deposit cone regions (B₁, B₂, B₃, B₄) are guided along a defined geometry stored in the movement control program.

11. A transloading assistance system according to claim 10 **characterised in that** the geometry is delimited by the outer storage container contour (32).

12. A transloading assistance system according to claim 10 or claim 11 **characterised in that** the impingement points of the crop material jet (13) on the deposit cone regions (B₁, B₂, B₃, B₄) lie on a straight line (22).

13. A transloading assistance system according to at least one of the preceding claims **characterised in that** the pivotal range of the transloading apparatus (6) and/or the impingement points of the crop material jet (13) on the deposit cone regions (B₁, B₂, B₃, B₄) is determined by the position and/or the size of the deposit cone regions(B₂, B₃, B₄).

14. A transloading assistance system according to at least one of the preceding claims **characterised in that** the manual movement steps for producing a first deposit cone (S₁, S₂, S₃, S₄) are effected having regard to characteristic parameters of the transport apparatus (7) and on the basis of characteristic parameters of the crop material (5) to be transloaded and the crop material throughput volume.

15. A transloading assistance system according to at least one of the preceding claims **characterised in that** the characteristic parameters can be the position of the edge walls (18, 20, 26, 27) of the transport apparatus (7), the cut length and the chaff quality of the crop material (5).

16. A transloading assistance system according to at least one of the preceding claims **characterised in that** the position of the edge walls (18, 20), the height of the edge walls (18, 20) and the empty volume of the storage container (8) of the transport apparatus (7) can be inputted manually into the learning program (21) and stored or can be automatically ascertained by means of suitable sensors and stored in the learning program (21).

17. A transloading assistance system according to at least one of the preceding claims **characterised in that** the parameters of the transloading apparatus (6) can be the position of the transloading apparatus (6) and that of the transloading flap (14).

18. A transloading assistance system according to at least one of the preceding claims **characterised in that** the operation of ascertaining the crop material throughput volume is effected having regard to crop material-specific parameters.

19. A transloading assistance system according to claim 18 **characterised in that** the crop material-specific parameters are the kind of crop material, the crop material moisture content and the cut length.

20. A transloading assistance system according to at least one of the preceding claims **characterised in that** with the pivotal movement of the transloading apparatus (6) to the last deposit cone region (B₁, B₂, B₃, B₄) to be filled the movement control program is manually or automatically deactivated.

21. A transloading assistance system according to at least one of the preceding claims **characterised in that** the movement control program actuates an acoustic or optical display (28) when during automatic production of the deposit cones (S₁, S₂, S₃, S₄) at at least one location the local filling height of the deposit cones (S₁, S₂, S₃, S₄) is no longer under a definable filling limit (29).

## Revendications

1. Système d'assistance de surcharge pour la commande automatique de la position du dispositif de surcharge d'une moissonneuse agricole pour la surcharge du produit de récolte sur un dispositif de transport, **caractérisé en ce qu'**un premier cône de déchargement (S₁, S₂, S₃, S₄) est établi manuellement et les étapes de déplacement nécessaires à l'établissement du premier cône de déchargement (S₁, S₂, S₃, S₄) et/ou les paramètres du dispositif de surcharge (6) sont enregistrés de manière à pouvoir être rappelés.

2. Système d'assistance de surcharge selon la revendication 1, **caractérisé en ce que** les étapes de déplacement manuelles enregistrées et/ou les paramètres du dispositif de surcharge (6) sont utilisés pour l'établissement d'autres cônes de déchargement (S₂, S₃, S₄)_{·}

3. Système d'assistance de surcharge selon la revendication 1 ou 2, **caractérisé en ce qu'**un dispositif de commande (17) possède un programme d'apprentissage (21) pour apprendre à établir un premier cône de déchargement (S₁, S₂, S₃, S₄), par lequel après l'activation correspondante du déroulement d'étapes de déplacement suscitées manuellement les unes après les autres, son déroulement temporel et des paramètres du dispositif de surcharge (6) sont détectés pour l'établissement d'un premier cône de déchargement (S₁, S₂, S₃, S₄) et sont enregistrés comme programme de commande de déplacement qui peut être activé à la fin du programme d'apprentissage (21) pour la commande automatique du dispositif de surcharge (6) afin d'établir au moins un autre cône de déchargement (S₁, S₂, S₃ , S₄).

4. Système d'assistance de surcharge selon au moins l'une quelconque des revendications précédentes, **caractérisé en ce que** l'établissement manuel d'un premier cône de déchargement (S₁, S₂, S₃, S₄) est lancé à partir d'une ligne de référence (24) et est terminé lorsqu'une géométrie du dispositif de transport (7) et/ou des limites de remplissage pouvant être définies sont atteintes.

5. Système d'assistance de surcharge selon au moins l'une quelconque des revendications précédentes, **caractérisé en ce que** le volume débitmétrique de produit de récolte qui a été surchargé pendant l'établissement manuel d'un premier cône de déchargement (S₁, S₂, S₃, S₄) dans le récipient de stockage (8) jusqu'à l'atteinte de la limite de remplissage (29) pouvant être définie de la zone de cône de déchargement afférente (B₁), est compensé par le volume débitmétrique de produit de récolte qui a été surchargé pendant le chargement des zones de cône de déchargement individuelles (B₁, B₂, B₃, B₄) dans la prochaine zone de cône de chargement (B₁, B₂, B₃, B₄) à charger respectivement et cette valeur pouvant être enregistrée comme valeur de référence.

6. Système d'assistance de surcharge selon au moins l'une quelconque des revendications précédentes, **caractérisé en ce qu'**une division du récipient de stockage (8) du dispositif de transport (7) en zones de cône de déchargement (B₁, B₂, B₃, B₄) recevant des cônes de déchargement (S₁, S₂, S₃, S₄) est effectuée manuellement à l'aide de la position des parois de bord (18, 19, 26, 27), de la hauteur des parois de bord (18, 19, 26, 27) et à l'aide du volume vide ou automatiquement à l'aide d'une unité de commande et d'évaluation.

7. Système d'assistance de surcharge selon au moins l'une quelconque des revendications précédentes, **caractérisé en ce que** le dispositif de commande commande le dispositif de surcharge (6) selon la division du dispositif de transport (7) en zones de cône de déchargement (B₁, B₂, B₃, B₄).

8. Système d'assistance de surcharge selon au moins l'une quelconque des revendications précédentes, **caractérisé en ce que** le volume des zones de cône de déchargement (B₁, B₂, B₃, B₄) est de même grandeur.

9. Système d'assistance de surcharge selon au moins l'une quelconque des revendications précédentes, **caractérisé en ce qu'**avec l'activation du programme de commande de déplacement, le dispositif de commande (17) pour la commande du dispositif de surcharge (6), le dispositif de surcharge (6) se déplacent automatiquement de la première zone de cône de déchargement (S₁, S₃) contigüe à la paroi de bord avant ou arrière (18, 20) du récipient de stockage (8) vers d'autres zones de cône de déchargement (S₁, S₂, S₃), le dispositif de surcharge (6) occupant dans la zone de cône de déchargement respective (S₁, S₂, S₃) une position de surcharge (X₁, X₂, X₃) pour la surcharge du produit de récolte et y séjourne pendant un intervalle de temps (t₀-t₁, t₁-t₂, t₂-t₃) jusqu'à ce que le volume débitmétrigue de produit de récolte surchargé ait atteint la valeur de référence enregistrée et définie auparavant dans le programme de commande de déplacement pour le volume débitmétrique de produit de récolte.

10. Système d'assistance de surcharge selon au moins l'une quelconque des revendications précédentes, **caractérisé en ce que** les points d'impact du jet de produit de récolte (13) sur les zones de cône de déchargement (B₁, B₂, B₃, B₄) sont guidés le long d'une géométrie définie et pouvant être enregistrée dans le programme de commande de déplacement.

11. Système d'assistance de surcharge selon la revendication 10, **caractérisé en ce que** la géométrie est limitée par le contour extérieur de récipient de stockage (32).

12. Système d'assistance de surcharge selon la revendication 10 ou 11, **caractérisé en ce que** les points d'impact du jet de produit de récolte (13) sur les zones de cône de déchargement (B₁, B₂, B₃, B₄) se trouvent sur une droite (22).

13. Système d'assistance de surcharge selon au moins l'une quelconque des revendications précédentes, **caractérisé en ce que** la zone de pivotement du dispositif de surcharge (6) et/ou les points d'impact du jet de produit de récolte (13) sur les zones de cône de déchargement (B₁, B₂, B₃, B₄) sont déterminés par la position et/ou la grandeur des zones de cône de déchargement (B₂, B₃, B₄).

14. Système d'assistance de surcharge selon au moins l'une quelconque des revendications précédentes, **caractérisé en ce que** les étapes de déplacement manuelles pour l'établissement d'un premier cône de déchargement (S₁, S₂, S₃, S₄) sont effectuées en tenant compte de paramètres caractéristiques du dispositif de transport (7) et à l'aide de paramètres caractéristiques du produit de récolte à surcharger (5) et du volume débitmétrique de produit de récolte.

15. Système d'assistance de surcharge selon au moins l'une quelconque des revendications précédentes, **caractérisé en ce que** les paramètres caractéristiques peuvent être la position des parois de bord (18, 20, 26, 27) du dispositif de transport (7), la longueur de coupe et la qualité de la paille de récolte (5).

16. Système d'assistance de surcharge selon au moins l'une quelconque des revendications précédentes, **caractérisé en ce que** la position des parois de bord (18, 20), la hauteur des parois de bord (18, 20) et le volume vide du récipient de stockage (8) du dispositif de transport (7) peuvent être saisis et enregistrés manuellement dans le programme d'apprentissage (21) ou peuvent être déterminés automatiquement à l'aide d'un dispositif de détection approprié et enregistrés dans le programme d'apprentissage (21).

17. Système d'assistance de surcharge selon au moins l'une quelconque des revendications précédentes, **caractérisé en ce que** les paramètres du dispositif de surcharge (6) peuvent être la position du dispositif de surcharge et (6) celle du clapet de surcharge (14).

18. Système d'assistance de surcharge selon au moins l'une quelconque des revendications précédentes, **caractérisé en ce que** la détermination du volume débitmétrique de produit de récolte est effectuée en tenant compte des paramètres spécifiques au produit de récolte.

19. Système d'assistance de surcharge selon la revendication 18, **caractérisé en ce que** les paramètres spécifiques au produit de récolte sont le type de produit de récolte, l'humidité du produit de récolte et la longueur de coupe.

20. Système d'assistance de surcharge selon au moins l'une quelconque des revendications précédentes, **caractérisé en ce qu'**avec le pivotement du dispositif de surcharge (6) vers la dernière zone de cône de déchargement (B₁, B₂, B₃, B₄) à remplir, le programme de commande de déplacement est désactivé manuellement ou automatiquement.

21. Système d'assistance de surcharge selon au moins l'une quelconque des revendications précédentes, **caractérisé en ce que** le programme de commande de déplacement actionne une indication acoustique ou optique (28) si pendant l'établissement automatique des cônes de déchargement (S₁, S₂, S₃, S₄) à au moins un endroit, la hauteur de remplissage locale des cône de déchargement (S₁, S₂, S₃, S₄) ne se trouve plus sous une limite de remplissage (29) pouvant être définie.
